# EUROPEAN PATENT SPECIFICATION

(11) **EP 1 768 502 B1**
(45) Date of publication and mention of the grant of the patent: **14.10.2009**
(21) Application number: 05770292.0
(22) Date of filing: 08.07.2005
(51) Int. Cl.: A23P 1/10, A23L 1/00, A23C 9/16

(54) **SINTERED POWDER CONFECTION**
HERSTELLUNG VON GESINTERTEM PULVER
CONFECTION DE POUDRE FRITTEE

(30) Priority: 09.07.2004 US 586236 P
(43) Date of publication of application: 04.04.2007
(73) Proprietor: Nestec S.A., 1800 Vevey (CH)
(72) Inventor: DESTEPHEN, Stephen, J., Columbus, OH 43235 (US); BUDWIG, Christopher, E., Dublin, OH 43017 (US); FU, Xiaoping, Hilliard, OH 43026 (US); PUSATERI, Marlo, A., Marysville, OH 43040 (US)
(74) Representative: Rauline, Mathilde
(86) International application number: PCT/EP2005/007382
(87) International publication number: WO 2006/005525

(56) References cited:
- EP-A- 0 373 697
- CH-A- 322 963
- FR-A- 1 186 619
- US-A- 4 031 238
- US-A- 4 394 395
- US-A- 4 640 839
- US-A1- 2002 017 197
- US-A1- 2002 064 413
- US-B1- 6 309 689

## Description

### FIELD OF THE INVENTION

The present invention relates to a sintered powder confection.

### BACKGROUND OF THE INVENTION

US Patent No. 4,394,395 entitled "Process for the Production of a Molded Food Product by Sintering" to Rostagno et al. relates to a process for making individual moulded food articles from powdered food starting materials, especially low fat, high carbohydrate-containing starting materials. The moulded powdered starting materials are uncovered to reduce the humidity in the final product and are subject to pressure to compact the particles prior to sintering. As a result the products from this type of process are typically hard, brittle, or dry.

It is desirable to provide a confection that is capable of delivering a light-eating, fast dissolving experience. A light-eating format is one where the texture is characterized by a melt-in-your mouth quality, being non-satiating, having a porous structure, and being crisp.

### SUMMARY OF THE INVENTION

It is an object of the present invention to obviate or mitigate at least one disadvantage of previous sintered confectionery products, and methods for their production.

In a first aspect of the present invention a sintered powder confection, comprising a at least a part consisting of a sintered powder, with a light texture, is characterized by a density of 0.1 - 0.6 g/ml, preferably 0.2 - 0.5g/ml, more preferably 0.25-0.35 g/ml, a closed porosity of 15 to 70, preferably 25-60, more preferably 40-50%, an open porosity of 10-45 preferably 20-40, more preferably 25-35%, a total porosity of 15-90 preferably 30-75, more preferably 40-65%, which is obtainable by the method of the invention.

In another aspect of the present invention there is provided a sintered powder confection, comprising a center piece consisting of a sintered powder, with a texture having a melt-in-your mouth quality, a porous and crisp structure, and being non-satiating.

In another aspect, the invention provides a method for the production of a powder confection, comprising the steps of obtaining a powder starting material wherein at least a proportion of the powder starting material is prepared by a spray drying method comprising individual particles; and without subjecting the powder to compacting, sintering the powder, such that the individual particles melt at their surface and adhere to one another to form a structured, porous, fused product.

Other aspects and features of the present invention will become apparent to those ordinarily skilled in the art upon review of the following description of specific embodiments of the invention.

### BRIEF DESCRIPTION OF THE DRAWINGS

Fig. 1 represents a schematic view of what is meant by pocket porosity and by open porosity

Fig. 2 represents a SEM image of a sintered product representing the state of the art

Fig. 3 represents a SEM image of a sintered product according to the invention

### DETAILED DESCRIPTION

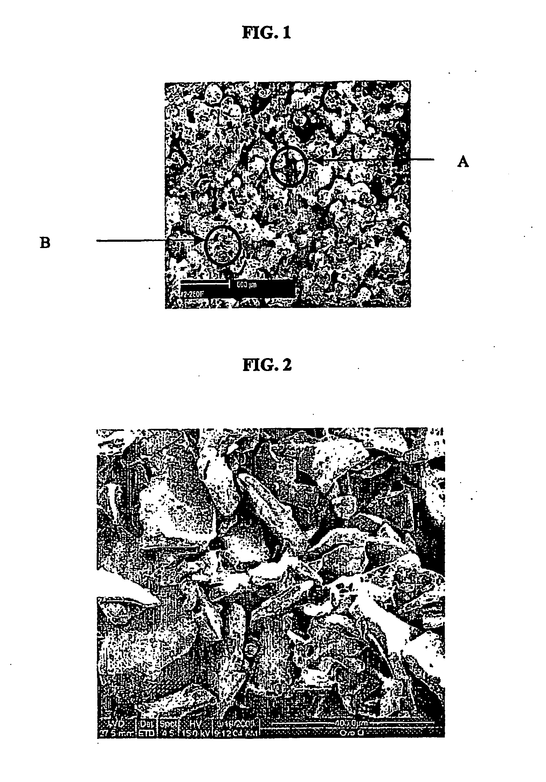

In the present specification, the terms pocket or open porosity (see "A", in Fig. 1) are used as synonyms. The definition of open or pocket porosity in light and crispy products such as the ones of the present invention is the total area of open space created by the spaces between at least three particles. The open pores are 'open' to the outside and air or liquid can easily transport into the space without the need for dissolution of the structure. A pocket porosity of 100% would represent no particle and just the space, 0% would be solid particles only, without any space.

In the present specification, the term closed porosity (see "B", in Fig. 1) is defined as the total amount of pores or space that is trapped in the solid. The liquid could not be in the pores without some degree of dissolution of said solid.

It is important to note than in the present specification, all percentages are expressed by weight unless otherwise specified, and that when porosities or densities are expressed, they are expressed on the sintered part of the confectionery product only, that is to say without coating, inclusions or the like.

This invention relates to a sintered product as defined by the claims, which can be used for example in a dairy confection, such as the center of a dairy confection, or in any other confection. The sintered product may be covered with one or more layers, such a layer of chocolate, like white chocolate, milk chocolate, dark chocolate, compounds chocolate or other confectionary coating including sugar based confectionery products.

The sintered product of the present invention can be used as the center of a confectionery product, but can also be used according to the knowledge of the skilled person. For example, it can also be used as a filling between wafers, as part of a coating or as a coating. It can also be used in layered products where one layer is formed by the sintered product of the invention, and the other layer is formed by another sintered product of the present invention but of different colour and/or density; or the other layer can further be a crunchy layer of chocolate, for example. The sintered piece can also be consumed as is, without a coating or other components. The sintered material can be used as inclusions in other confectionery (like rice in a Crunch bar).

The sintered product of the invention can comprise inclusions such as nuts, puffed cereals, chocolate chips, sugar chips, fruit pieces, caramel pieces, biscuits, wafers, creams or the like.

The sintered product must contain at least one glassy powder. Glassy powders may be characterized by the presence of a glass transition temperature. The glassy powder can be a dairy powder, but can also be other types of powders, For example, it can be a sugar based powder, such as a chocolate powder, or fruit concentrate powder, or malted milk powder, maltodextrins, corn syrup solids, and other carbohydrates.

If the sintered product is made from a dairy powder, the dairy powder contains a dairy component which may be any milk-derived product or component of milk, such as at least one of milk, cream, condensed milk, anhydrous milk fat, milk solids, milk protein, milk protein isolates, whey, butter, yoghurt, casein, caseinate salts, and protein-containing dairy substitutes. Dairy substitutes may include soy protein, soy protein isolates, soymilk, wheat protein, wheat protein isolates, and coconut milk. Preferable dairy components are milk powder, such as skim milk powder or whole milk powder. The dairy component is preferably chosen such that the resulting texture of the product is porous, crisp, and has a melt-in-your-mouth quality.

If the sintered product is made from a sugar based powder, the powder contains at least one carbohydrate or other material with a glass transition point or combination of, such as maltodextrin, corn syrup solids, fructose, dextrose, sucrose, lactose, maltose or other mono, di, or polysaccarides. The composition may also include other ingredients such as proteins, flavorings or lipids.

When prepared from whole milk or skim milk powder, and other milk-derived products, as well as any other sugar-based powder, the sintered dairy product can provide the consumer with a high milk solid product in a "light-eating" format. Light-eating is a term used to describe the texture of the product. Advantageously, the product of the present invention may be crisp, porous, have a melt-in-your mouth quality, and be non-satiating. This sintered product can be more nutritious than many other confectionary products, having comparable amounts of milk solids to a glass of fluid milk, enhanced calcium content, and elevated milk protein levels when milk products are used. For instance, in terms of milk solids, a bar made from a dairy powder containing 70% milk powder, and coated with white chocolate can deliver approximately 43g of milk solids per 100 grams of finished product. At the same time, the dairy product center provides a light, less satiating eat than traditional fat-based confectionery. The flavor of the product is that of fresh milk. This combination of product attributes (high milk solids, fresh milk flavour, light-eating texture) is presently non-existent in the confectionery area.

The sintered dairy product may also contain a sweetener. Sweeteners which may be employed in the present invention are known in the art and include, but are not limited to, corn syrup, such as high maltose corn syrup, wheat syrups, low molecular weight starches or maltodextrins, sucrose, fructose, aqueous cane sugar, dextrose, maltose, lactose, maltitriose, molasses, honey, galactose, and sugar substitutes known in the art such as sorbitol, xylitol, mannitol, lactitol, sacharin, aspartame, maltitol, or isomalts, and mixtures thereof.

According to one aspect, the proportion of sweetener in the starting dairy powder may be 0-50% by weight based on the weight of the dairy powder starting material. Preferably the weight of sweetener, such as sucrose, in the starting dairy powder is 10 - 20%. In one aspect, the invention provides a dairy confection made from a dairy powder containing 60 - 90% milk powder (such as whole milk powder), 10 - 20% sucrose, and 10-20% maltodextrin. In one aspect, the dairy powder starting material contains 70% milk powder, 15% sucrose, and 15% maltodextrin.

According to another aspect, the proportion of the sweetener in the starting carbohydrates-based powder may be may be 1-100% by weight based on the weight of the powder starting material. Preferably the weight of sweetener, such as 24 DE corn syrup solids, in the starting powder is 20-80 %. In one aspect, the invention provides a confection made from a powder containing 90-98 % 24 DE corn syrup solids, 0-9% sucrose, 0-3% flavoring

The starting material, either dairy-based or sugar-based, can be a mix of said starting material with other powders. The other powders can be, for example Nesquik ®, Milo ®, cocoa powder, fruit powder, chocolate powder.. The proportion of the other powder must be at a level so that the combination of powders still delivers a minimum of 15% closed porosity in the final blend. The actual amount is dependant on the closed porosity of each of the powders.

Preferably, the sintered part of the confectionery product has a moisture content low enough to maintain a Tg above the ambient temperature; as different materials have different Tg's, giving precise numbers is not relevant, but we may say that the sintered part of the confectionery product preferably have a moisture content of less than 12%, more preferably less than 6%, and even more preferably less than 5%.

The sintered product may include any of a number of other components, such as flavourings, colourants, fillers, acidulants, stabilizers, emulsifiers, buffering agents, and small confectionary products. Examples include fruit extracts, fruit powders, maltodextrins, cocoa, coffee, chicory, cereals like malted cereals, fats, lecithins, boiled caramel, nougatine, nuts, syrup, chocolate pieces, expanded cereals, and dried fruit or size-reduced or whole candied fruit. These components may be in powder form, or may be larger pieces that are blended with the dairy powder, such as chocolate or fruit pieces.

A sintered confection product in accordance with one aspect of the present invention has a light texture. This light texture results from a structured porous matrix that, after biting, quickly dissolves in the mouth, leaving no sticky residue on the teeth. The texture of the product can be described both qualitatively, as well as physically. Porosity (closed porosity, open or pocket porosity, and total porosity) are measures of the amount of air-space present in the sample, and thus a measure of the compactness of the product The "melt-in-your-mouth" quality can be measured as a function of dissolution rate: the faster the product dissolves the more "melt-in-your-mouth" quality. Density and hardness also are measures of the texture of the product.

The product in accordance with one aspect of the invention, preferably has a density of 0.1 - 0.6 preferably 0.2 - 0.5g/ml, more preferably 0.25-0.35 g/ml, a closed porosity of 15 to 70, preferably 25-60, more preferably 40-50%, an open porosity of 10-45 preferably 20-40, more preferably 25-35%, a total porosity of 15-90 preferably 30-75, more preferably 40-65%. Further measurements could be used to disclose the light texture of the sintered product according to the invention, for example hardness and dissolution rate. However, these parameters are linked to the ones disclosed above, as porosity dictates dissolution rate, and porosity and density dictate hardness. However, to give a complete disclosure of the invention, the products according to the present invention will preferably have a dissolution rate of 1 to 10 seconds (a half life time of 7g of sample dispersed in 400ml of water at 85°C with agitation), and a hardness that could be comprised between 4000 and 40000 g of force.

These measures are measures of texture and relate only to the sintered part of confectionery product, i.e. they do not include coatings, or other possible component such as chocolate or wafers used as layers or inclusions such as nuts.

The sintered dairy product may be covered with one or more layers, such a layer of chocolate, like white chocolate, milk chocolate, or dark chocolate, or other confectionary coating. The outer coating may furthermore contain nuts, fruits, cereals, candy, and other ingredients known to those skilled in the art. This outer layer, when present, can complement the flavor of the dairy product center.

The process for the production of a powder confection of the invention, involves sintering. Sintering involves the bonding of adjacent surfaces of particles in a mass of powder by application of heat and/or humidity, melting only the particle surfaces, causing the powder to form a coherent mass. Sintering strengthens a powder mass and normally produces densification. The powder mass starts in a glassy state. With sufficient heat and/or humidity the powder mass reaches, a glass transition temperature (Tg), at which point the particles enter the rubbery state and become sticky on the surface and fuse to one another. When heat and/or humidity is removed, the particles return to a temperature below the Tg, and the piece returns to the glassy state as a solid. Tg is inversely related to moisture content for powders such as milk powders. Thus, if the powder is subjected to sufficient humidity, no temperature increase is required to reach the Tg.

The sintered product of the present invention is made by a method comprising the steps of providing a powder starting material wherein at least a proportion of the powder starting material is prepared by a spray drying method and without subjecting the powder to compacting, sintering the powders, such that the individual particles melt at their surface and adhere to one another to form a structured, porous, fused product

The sintered part of the confectionery product of the present invention should not be compacted prior to sintering. Indeed, regular sintering (as described by Rostagno) is performed with a compression step, for example by means of pistons or the like, at a pressure that is at a minimum of 1 kg/cm². The compression is reported to be used to insure a high level of particle to particle contact. We have found that by controlling the sintering conditions a cohesive mass can be achieved without the need for the extensive compression.

At least a proportion of the powder starting material is prepared by a spray drying method. The proportion required is enough to achieve a minimum of 15% closed porosity in the final composition of any blended powders. The components of the powder are dissolved in solution, and the resulting solution is spray-dried. Air, nitrous oxide, carbon dioxide, or nitrogen gas can be used to foam spray-dry the aqueous solution. Using a gas injection system serves to trap the gas in the powder, creating a porous structure which is measured as closed porosity. Other factors that can be used to vary the particle shape and size include the nozzle type, the viscosity of the liquid solution, and the spray rate. When spray dried together as a milk mix, the resulting powder has a proportion of amorphous material created through rapid moisture removal and cooling.

As mentioned above, other components can be added to the powder either prior to spray drying (in which case they are preferably soluble) or after spray drying, such as the addition of puffed rice, or pieces of chocolate, nuts, dried fruit, cocoa powder, malt powder, flavorings, crystalline matter, reformed protein or other small inclusions known to those skilled in the art.

Preferably the particle sizes of the powdered components are approximately 0.001 - 3.0 mm (1 to 3000 microns).

In one aspect, as an example, if only spray dried powder is utilized for sintering (without a coating and without inclusions), the sintered material characterized by a density of 0.1 - 0.6 g/ml, a closed porosity of 15 to 70%, an open porosity of 10-45%, a total porosity of 15-90%.

The powder is sintered without prior compaction, which is one of the essential characteristics of the process. This lack of compaction is significant because compaction compromises the light and porous texture.

The temperature and or the humidity are raised such that the temperature of the powder is above the Tg. If temperatures are too high, the powder can undergo undesirable browning, caramelization, and collapse/shrinking of the structure. Upon reaching a temperature in excess of Tg, the individual particles enter the rubbery state and become sticky on the surface and fuse to one another. Upon cooling below Tg, the piece returns to the glassy state as a solid. The time and temperature of sintering are dependent on a variety of factors, including the Tg, the composition of the powder, the moisture content of the powder, the humidity in the space in which sintering takes place, etc.

Preferably, moisture loss is prevented during sintering, for example by raising the humidity or by covering the powder during sintering. Retaining moisture enhances fusing at a lower temperature, while avoiding browning and formation of undesirable off-flavors.

Once the sintering is complete, the structured porous product can be brought to a temperature below Tg to re-solidify the product.

The sintering may be carried out with the powder in one larger recipient or in individual recipients. If the sintering is carried out with the powder in one larger recipient, individual portions can be divided out after sintering, before or after cooling.

Alternatively, in one aspect, a mould can be used. The method, in such a case, could comprise the steps of loose filling a mould with a powder, such as a dairy powder; sintering the powder such that the individual particles melt at their surface and adhere to one another to form a porous structured fused product; and removing the product from its mould. The mould may be covered during sintereing to prevent moisture loss or the atmosphere of the heating unit humidified to a level higher than the Aw of the given powder at the operating temperature. Any type of mould, as is known in the art, can be used for making the confection, depending on the shape and size desired. Ball-shaped moulds or bar-shaped moulds can be used, for instance.

In another application, the powder can be loosely spread on a sheet or belt and again the individual particles melted at their surfaces promoting adherence to one another to form a porous structured fused product, which can be cut into desired shape and size. The sheet of powder can be covered to avoid moisture loss or the atmosphere of the heating unit raised to a level higher than the Aw of the given powder at the operating temperature.

The method of production of the sintered product according to the present invention can comprise the following steps: first, any spray-dried powder or small particulate with a glassy phase is filled into a mould, or pre-formed into a sheet or other individual shape. It has to be understood that the powder can be a mixture of different powders, as previsouly mentionned. Optionally, a light scraping is performed if needed, in order to level the surface and/or remove excess powder from the surface of the mould or forming device. The powder/particulates are not subjected to compacting, such that above the glass transition temperature (Tg) the interparticle bonds are allowed to form through plastic flow. These bonds then solidify as the product cools below the Tg. The primary particle integrity remains largely in tact with bond formation isolated mainly to particle surfaces. In some cases, the mould can be inverted to demould the powder/particulates before heating. The cohesive nature of the powder/particulates allows it to retain the shape of the mould. The mould, sheet or formed powder/particulates can be either sealed closed to prevent moisture loss during the sintering heat treatment or can be left open to the atmosphere if the relative humidity of the heating environment is raised enough to retain the moisture of the powder. The powder or particulates are then subject to a period of heat treatment at a temperature close to the glass transition temperature of the powder. The temperature will range from 40°C - 140°C for most formulations, with duration of several minutes (typically 5-20 minutes) during which time the mould, sheet or formed powder/particulates stay in the same orientation. After sintering, if moulded, the product is cooled below the Tg to solidify the product. If sheeted, the product can be cut into shapes. After sintering, pre-formed pieces are cooled.

The pieces may then be coated, if desired with a further confectionary product.

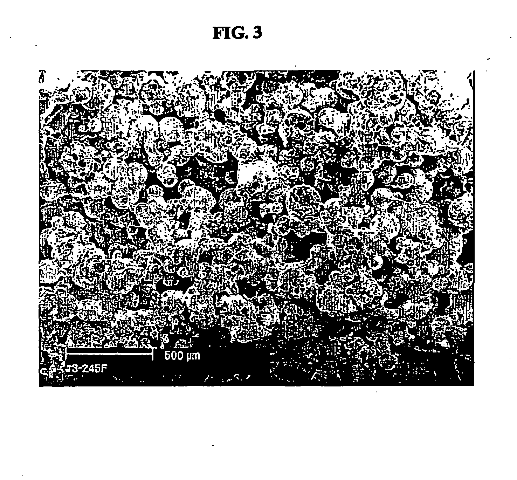

The product according to the invention has, as previously mentionned, a structure and an effect in mouth that are unknown in the confectionery field. These effects are examplified by Fig. 2 and 3.

Figure 2 shows the state of the art, wherein non-porous particulates are fused. Although there is open porosity to aid dissolution in the mouth, the particles do not have any closed porosity. The effect of this is that saliva or solvent can get between the particles to break the bonds, but does not quickly get inside the particle. The rate of dissolution of the particles is slower compared to the particles of the invention, for materials of the same composition. The particles are very noticeable on the tongue and can feel gritty or sanding during the slower dissolution (based on same materials).

Figure 3 clearly shows the porous nature of the particles in this invention. The closed porosity allows channels for the solvent to enter the particles and enhance the rate of dissolution. Additionally, the walls around the pores are thin, again ehancing the rate of dissolution. The particles of the invention have a minimal sandy or gritty feeling in the mouth.

### Example 1

A sweetened milk mix was foam spray-dried using nitrogen gas injection, creating a low-density and high porous (30-70% closed porosity) spray dried sweet milk powder. Initial formulations of the sweet milk mix were 70% whole milk powder, 15% sucrose and 15% maltodextrin (dry basis). This powder was then used to loose-fill traditional moulds. The moulds were covered and heated in a convection oven to elevate the temperature of the powder above that of its glass transition temperature (Tg). No compaction was used prior to heating. The oven was set at 280°F (ca. 137°C) and the confection was left in the oven for about 10 minutes. The confectionary was allowed to cool and removed from the moulds.

This piece, or confectionery center, was then enrobed in either traditional chocolate or a variety of compound coatings.

The final product is light and quick to dissolve in the mouth, and does not stick to the teeth. It delivers a high level of milk solids (70%) and has a fresh milk flavor.

### Example 2

A dairy based mix was dried to create a low-density and highly porous (15-70% closed porosity) powder. Initial formulations of the dairy based mix were 70% whole milk powder, 0-15% sucrose and 15-30% a low DE corn syrup solids (dry basis). This powder can then be loose filled into traditional moulds, made into pre-formed sheets or pre-formed individual pieces. The powder is then heated in a covered mould or the powder is uncovered and subjected to a humid atmosphere (12-21% RH) to go above the glass transition of the powder in order to sinter the product. No compaction is used prior to heating. The oven was set at 240°F (115.5°C) and the confection was left in the oven for about 8 minutes. The confectionery product is then allowed to cool to reach a solid state. This product is characterized by a density of 0.1 - 0.6 g/ml, a closed porosity of 15 to 70%, an open porosity of 10-45%, a total porosity of 15-90%.

This piece or confectionery center was then enrobed in either traditional chocolate or a variety of compound coatings.

The final product is light and quick to dissolve in the mouth and doesn't stick to the teeth. It delivers a high level of milk solids (50-100%) and has a fresh milk flavor.

### Example 3

Two or more powders/particulates with different physical properties can be used to form unique products. Powders/particulates can be either amorphous or crystalline (one has to have at least a portion in the glassy state and one has to have a minimum closed porosity so that when the two materials are blended the closed porosity of the blend is at least 15%). Examples of powders include but are not limited to milk powder, fruit powder, Nesquik, Milo, flavors and colors. The products produced by the following applications are characterized by a density of 0.1 - 0.6 g/ml, a closed porosity of 15 to 70%, an open porosity of 10-45%, a total porosity of 15-90%. This application can be used in the following ways:

### Example 3A

Two or more powders, one being mainly of an amorphous glass and one being of mainly crystalline material, can be dry blended together and sintered into sheets or individual pieces. For example of a high crystalline sugar product, a dried dairy based mix with a closed porosity of 40% was dry blended with Nesquik (which has a high proportion of crystalline sucrose) at a ratio of 50/50. The dry blend was spread onto a baking pan to form a sheet and then heated for about 2 minutes in an atmosphere of about 5% RH, after the 2 minutes the humidity of the atmosphere was raised to about 20% RH to sinter the product. The product was heated for an additional 4 minutes. During the 4 minutes, the humidity of in the oven was reduced to about 14% through the addition of make-up air (at 5% RH). No compaction is used prior to heating. The oven was set at 240°F (115.5°C). The confectionery product is then allowed to cool to reach a solid state.

### Example 3B

Two or more powders with different glass transition temperatures can be dry blended together and sintered into sheets or individual pieces. This dry blend must be sintered at a temperature which prevents the material with the lower glass transition temperature from burning and the structure from collapsing. At this temperature the plastic flow of this ingredient will cause the rest of the higher glass transition material to stick to it thus sintering the entire dry blended mass without having to reach the higher more severe temperatures. Resulting product characteristics include a density of 0.1 - 0.6 g/ml, a closed porosity of 15 to 70%, an open porosity of 10-45%, a total porosity of 15-90%, a hardness of 4000-40000 g of force, and a dissolution rate of 1-10 seconds. For an example, a dried dairy based mix with a closed porosity of 40% was dry blended with a dried raspberry powder at a ratio of 50/50. The dry blend was spread onto a baking pan to form a sheet and then heated for about 2 minutes in an atmosphere of about 5% RH, after the 2 minutes the humidity of the atmosphere was raised to about 12% RH to sinter the product The product was heated for an additional 3 minutes. During the 3 minutes, the humidity of in the oven was reduced to about 8% through the addition of make-up air (at 5% RH). No compaction is used prior to heating. The oven was set at 220°F (104.4°C). The confectionery product is then allowed to cool to reach a solid state.

Two powders with different glass transition points can be used in a layered product where powder 1 and powder 2 alternate. Temperature and RH conditions have to be used to insure complete sintering of the powder with the higher Tg. Due to the different glass transition temperatures of the powders, the lower Tg powder will form a more brittle structure, thus creating a multi-textural, multi-flavored finished product.

The above-described embodiments of the present invention are intended to be examples only.

## Claims

1. A sintered powder confectionery **characterized in that**
a) it comprises at least a sintered powder with a light texture **characterised by** a density of 0.1 - 0.6 g/ml, a closed porosity of 15 to 70%, an pocket porosity of 10-45%, a total porosity of 15-90% and that
b) said sintered powder is obtainable by the process comprising the steps of
(a) obtaining a spray dried powder starting material comprising individual particles; and
(b) without subjecting: the spray dried powder starting material to compacting, sintering the powder, such that the individual particles melt at their surface and adhere to one another to form a structured, porous, fused product.

2. A sintered powder confectionery according to claim 1 wherein the sintered powder includes amorphous particulates such as fruits, milk, coffee, hard-boiled candy, biscuit, wafers, and/or crips rice.

3. A sintered powder confectionery according to claim 1 or claim 2 wherein the sintered powder includes crystalline components such as sugar, salt, acids and/or starches.

4. A sintered powder confectionery according to any preceeding claim wherein the sintered powder confectionery is coated.

5. A sintered powder confectionery according to any preceeding claim wherein the texture has a melt-in-your mouth quality, a porous and crisp structure and is non-satiating.

6. A sintered powder confectionery according to any preceeding claims comprising inclusions such as nuts, puffed cereals-chocolate chips, sugar chips fruit pieces, caramel pieces, biscuits, wafers, creams.

7. A method for the production of sintered powder confectionery comprising at least sintered powder comprising the steps of
(a) obtaining a spray dried powder starting material comprising individual particles; and
(b) without subjecting the spray dried powder starting material to compacting, sintering the powder, such that the individual particles melt at their surface and adhere to one another to form a structured, porous, fused product.

8. A method according to claim 7 wherein the starting material further comprises at least one of cocoa, malt, tea, coffee, fruit, starch, other carbohydrates, and proteins.

9. A method according to claim 7 or claim 9 further comprising the step of preventing loss of moisture from the dairy powder during sintering.

10. A method according to any one of claims 7 to 9 further comprising the step of coating the structured porous, fused product.

11. A sintered powder confectionery, made by the method of any one of claims 7 to 10,

## Patentansprüche

1. Gesintertes Pulverkonfekt, **dadurch gekennzeichnet, dass**
a) es mindestens ein gesintertes Pulver mit einer leichten Textur umfasst, das durch eine Dichte von 0,1 bis 0,6 g/ml, eine geschlossene Porosität von 15 bis 70 %, eine Taschenporosität von 10 bis 45 %, eine Gesamtporosität von 15 bis 90 % charakterisiert ist und dass
b) das gesinterte Pulver nach einem Verfahren erhältlich ist, das die Schritte aufweist:
(a) Erhalten eines sprühgetrockneten, pulverförmigen Ausgangsmaterials, das individuelle Teilchen umfasst und
(b) ohne dass das sprühgetrocknete, pulverförmige Material einer Verdichtung unterworfen wird, Sintern des Pulvers, so dass die individuellen Teilchen an ihrer Oberfläche schmelzen und aneinander haften unter Bildung eines strukturierten, porösen geschmolzenen Produkts.

2. Gesintertes Pulverkonfekt nach Anspruch 1, worin das gesinterte Pulver amorphe Teilchen, wie Früchte, Milch, Kaffee, hartgekochtes Bonbon, Biskuits, Waffeln und/oder Knusperreis enthält.

3. Gesintertes Pulverkonfekt nach Anspruch 1 oder Anspruch 2, worin das gesinterte Pulver kristalline Komponenten, wie Zucker, Salz, Säuren und/oder Stärken enthält.

4. Gesintertes Pulverkonfekt nach einem der vorangegangenen Ansprüche, worin das gesinterte Pulverkonfekt beschichtet ist.

5. Gesintertes Pulverkonfekt nach einem der vorangegangenen Ansprüche, worin die Textur eine Schmelz-in-deinem-Mund-Qualität, eine poröse und knusprige Struktur aufweist und nicht sättigend ist.

6. Gesintertes Pulverkonfekt nach einem der vorangegangenen Ansprüche, das Einschlüsse, wie Nüsse, Puffcerealien, Schokoladenchips, Zuckerchips, Fruchtstücke, Karamellstücke, Biskuits, Waffeln, Cremes umfasst.

7. Verfahren zur Herstellung von gesintertem Pulverkonfekt, das mindestens ein gesintertes Pulver umfasst, welches die Schritte aufweist:
(a) Erhalten eines sprühgetrockneten, pulverförmigen Ausgangsmaterials, das individuelle Teilchen umfasst und
(b) ohne dass das sprühgetrocknete, pulverförmige Anfangsmaterial einer Verdichtung unterworfen wird, Sintern des Pulvers, sodass die individuellen Teilchen an ihrer Oberfläche schmelzen und aneinander haften unter Bildung eines strukturierten, porösen, geschmolzenen Produkts.

8. Verfahren nach Anspruch 7, worin das Ausgangsmaterial weiterhin mindestens ein solches aus Kakao, Malz, Tee, Kaffee, Frucht, Stärke, andere Kohlenhydrate und Proteine umfasst.

9. Verfahren nach Anspruch 7 oder Anspruch 8, das weiterhin die Stufe aufweist, den Verlust von Feuchtigkeit aus dem Milchpulver während des Sinterns zu verhindern.

10. Verfahren nach einem der Ansprüche 7 bis 9, das weiterhin die Stufe aufweist, das strukturierte, poröse, geschmolzene Produkt zu beschichten.

11. Gesintertes Pulverkonfekt, hergestellt nach dem Verfahren nach einem der Ansprüche 7 bis 10.

## Revendications

1. Produit de confiserie en poudre frittée, **caractérisé en ce que**
a) il comprend au moins une poudre frittée ayant une texture légère **caractérisée par** une masse volumique de 0,1 à 0,6 g/ml, une porosité fermée de 15 à 70 %, une porosité de poches de 10 à 45 %, une porosité totale de 15 à 90 %, et en ce que
b) ladite poudre frittée peut être obtenue par le procédé comprenant les étapes consistant à
(a) à obtenir une matière de départ en poudre séchée par atomisation comprenant des particules individuelles ; et
(b) sans soumettre à la matière de départ en poudre séchée par atomisation à un compactage, à fritter la poudre, de telle sorte que les particules individuelles fondent au niveau de leur surface et adhèrent les unes aux autres pour former un produit fusionné, poreux, structuré.

2. Produit de confiserie en poudre frittée suivant la revendication 1, dans lequel la poudre frittée comprend des particules amorphes telles que des fruits, le lait, le café, un produit de confiserie ayant subi une cuisson lente, des biscuits, des gaufrettes et/ou du riz croustillant.

3. Produit de confiserie en poudre frittée suivant la revendication 1 ou la revendication 2, dans lequel la poudre frittée comprend des constituants cristallins tels que du sucre, du sel, des acides et/ou des amidons.

4. Produit de confiserie en poudre frittée suivant l'une quelconque des revendications précédentes, ledit produit de confiserie en poudre frittée étant enrobé.

5. Produit de confiserie en poudre frittée suivant l'une quelconque des revendications précédentes, dans lequel la texture a une qualité de fusion en bouche, une structure poreuse et croustillante et est non rassasiant.

6. Produit de confiserie en poudre frittée suivant l'une quelconque des revendications précédentes, comprenant des inclusions telles que des noix, des céréales soufflées, des granules de chocolat, des granules de sucre, des morceaux de fruits, des morceaux de caramel, des biscuits, des gaufrettes, des crèmes.

7. Procédé pour la production d'un produit de confiserie en poudre frittée comprenant au moins une poudre frittée, comprenant les étapes consistant :
(a) à obtenir une matière de départ en poudre séchée par atomisation comprenant des particules individuelles ; et
(b) sans soumettre la matière de départ en poudre séchée par atomisation à un compactage, à fritter la poudre, de telle sorte que les particules individuelles fondent à leur surface et adhèrent les unes aux autres pour former un produit fusionné structuré poreux.

8. Procédé suivant la revendication 7, dans lequel la matière de départ comprend en outre au moins une des matières consistant en le cacao, le malt, le thé, le café, des fruits, l'amidon, d'autres glucides et des protéines.

9. Procédé suivant la revendication 7 ou la revendication 9, comprenant en outre l'étape de prévention de la perte d'humidité du produit laitier en poudre au cours du frittage.

10. Procédé suivant l'une quelconque des revendications 7 à 9, comprenant en outre l'étape d'enrobage du produit fusionné structuré poreux.

11. Produit de confiserie en poudre frittée, préparé par le procédé de l'une quelconque des revendications 7 à 10.
